# EUROPEAN PATENT SPECIFICATION

(11) **EP 1 798 204 B1**
(45) Date of publication and mention of the grant of the patent: **18.02.2009**
(21) Application number: 05027751.6
(22) Date of filing: 19.12.2005
(51) Int. Cl.: C02F 1/32

(54) **Fluid cleaning system and method for cleaning a fluid**
Vorrichtung und Verfahren zur Flüssigkeitsreinigung
Système et procédé pour nettoyer des fluides

(43) Date of publication of application: 20.06.2007
(73) Proprietor: KANG NA HSIUNG ENTERPRISE CO., LTD., Chia-Li Town T'ai nan Hsien (TW)
(72) Inventor: Hu, Yen-Jung, Hsin-Chu City (TW); Chen, Hsi-Yu, Tainan City (TW); Lin, Chih-Hsiang, Ping-Tung Hsien (TW)
(74) Representative: Barz, Peter

(56) References cited:
- EP-A- 0 705 623
- DE-A1- 10 000 269
- US-A- 5 766 455
- US-A1- 2004 178 142
- US-A1- 2005 211 642
- PATENT ABSTRACTS OF JAPAN vol. 2000, no. 01, 31 January 2000 (2000-01-31) & JP 11 290695 A (SUMITOMO ELECTRIC IND LTD), 26 October 1999 (1999-10-26)
- PATENT ABSTRACTS OF JAPAN vol. 1998, no. 02, 30 January 1998 (1998-01-30) & JP 09 267043 A (NIPPON MUKI CO LTD), 14 October 1997 (1997-10-14) & DAOUD ET AL: "Surface functionalization of cellulose fibers with titanium dioxide nanoparticles and their combined bactericidal activities" SURFACE SCIENCE, NORTH-HOLLAND PUBLISHING CO, AMSTERDAM, NL, [Online] vol. 599, no. 1-3, pages 69-75, XP005196474 ISSN: 0039-6028 Retrieved from the Internet: URL:http://www.sciencedirect.com/science?_ ob=MImg&_imagekey=B6TVX-4HHH7C0-1-C&_cdi=5 546&_user=987766&_orig=browse&_coverDate=1 2%2F30%2F2005&_sk=994009998&view=c&wchp=dG LbVzb-zSkzS&md5=bdbb581719c93570c0ebdb68d0 ac11c9&ie=/sdarticle.pdf> [retrieved on 2005-11-08]
- PATENT ABSTRACTS OF JAPAN vol. 2003, no. 12, 5 December 2003 (2003-12-05) & JP 2004 114669 A (SUGITO TSUNEO), 15 April 2004 (2004-04-15)
- PATENT ABSTRACTS OF JAPAN vol. 2003, no. 12, 5 December 2003 (2003-12-05) & JP 2005 177713 A (UBE IND LTD; UBE MATERIAL INDUSTRIES LTD), 7 July 2005 (2005-07-07)

## Description

This invention relates to a fluid cleaning system and a method for cleaning a fluid, more particularly to a fluid cleaning system with a photocatalyst unit formed from composite fibers and a method for cleaning a fluid using such system.

In recent years, much attention has been paid to antibiotic, antifouling, air-cleaning, and deodorizing functions of photocatalysts. The aforesaid functions are realized by electrons and holes generated by exposing photocatalysts to ultraviolet light or sunlight. The electrons and holes thus formed react with oxygen and water nearby so as to generate superoxide anion and hydroxyl radical. Upon reacting with organic matter, hydroxyl radical will cause an oxidation in the organic matter, thereby resulting in decomposition of the organic matter.

With their ability to decompose organic matter, photocatalysts have been widely used in several fields, for example, fluid-cleaning systems. In the conventional fluid-cleaning system, photocatalyst typically is coated on a wall of the fluid-cleaning system or on a filter in the form of a thin layer. For example, US 5,790,934 and US 6,063,343 disclose a reactor comprising a plurality of fins coated with a photocatalyst. Also, TW 402162 discloses a UV/titanium oxide photo-oxidation device comprising a stirring unit with a plurality of stirring fins coated with a photocatalyst. In addition, photocatalysts can be coated on a surface of a support structure, such as glass beads, ceramics, and stainless steel beads, based on the actual requirements. However, as reaction time increases, some problems are encountered, e.g., peeling of the coated photocatalyst from the support structure, and decline in the photocatalyst efficiency due to insufficient absorbance of ultraviolet light. In addition, peeling of the coated photocatalyst is much more serious in the water-cleaning system. Although attempts have been tried to coat photocatalyst on a flexible support, such as fiber or fabric, the peeling problem still exists. Therefore, there is a need for preventing coated photocatalyst from peeling from a support structure.

EP-A-705623 discloses a photoreactive noxious substance purging agent which comprises a photoreactive semiconductor, a carrier and a micro-fibrillated microfiber. Similarly, US-A-2004/0178142 disclose an integrated paper comprising fibrillated fibers and active particles such as, e.g., titanium dioxide, immobilized therein.

On the other hand, in order to achieve optimal photocatalystic effect, attempts have been tried to directly add photocatalyst particles into wastewater in a water-cleaning device for decomposing organic matters in wastewater. For example, US 5,174,877 and US 5,294,315 disclose systems for treating a contaminated fluid. The systems include a reactor tank for receiving the contaminated fluid and photocatalystic particles. Since the particle diameter of commercially available photocatalysts ranges from several ten to several hundred nanometers, after photocatalyzing wastewater, it is necessary to separate photocatalyst from processed water by using a filter. However, photocatalyst particles can plug the pores of the filter during filtration. As a consequence, the reaction is required to be stopped for replacing a new filter. As such, the manufacturing cost is considerably increased, and the cleaning efficiency is reduced. Therefore, there is a need in the art to prevent blocking of the filter by the photocatalyst particles.

Therefore, the object of the present invention is to provide a fluid cleaning system and a method for cleaning a fluid that can overcome the aforesaid drawbacks of the prior art.

According to one aspect of this invention, a fluid cleaning system comprises: a reactor unit for receiving a fluid body to be processed; a photocatalyst unit disposed in the reactor unit to contact the fluid body to be processed and including composite fibers, the composite fibers including a first fiber component made from a first organic polymer, and a second fiber component made from a second organic polymer and particulate photocatalyst; and a light unit for irradiating the photocatalyst unit to activate the particulate photocatalyst.

According to another aspect of this invention, a method for cleaning a fluid comprises: preparing composite fibers having a length ranging from 1 to 80 mm and including a first fiber component made from a first organic polymer and, a second fiber component made from a second organic polymer and particulate photocatalyst; adding the composite fibers in a fluid body in a reaction unit such that the composite fibers are freely suspended in the fluid body; and irradiating the suspended composite fibers in the fluid body in the reactor unit.

Other features and advantages of the present invention will become apparent in the following detailed description of the preferred embodiments of this invention, with reference to the accompanying drawings, in which:
Fig. 1 is a cross-sectional view of the first preferred embodiment of a composite fiber according to this invention;
Fig. 2 is a cross-sectional view of the second preferred embodiment of a composite fiber according to this invention;
Fig. 3 is a perspective view showing a fiber bundle formed from the composite fibers according to this invention;
Fig. 4 is a perspective view showing a texturized fiber formed from the composite fibers according to this invention;
Fig. 5 is a perspective view showing a fabric formed from the composite fibers according to this invention;
Fig. 6 is a perspective view showing a non-woven fabric formed from the composite fibers according to this invention;
Fig. 7 is a perspective view showing a braided fabric formed from the composite fibers according to this invention;
Fig. 8 is a schematic view of the first preferred embodiment of a fluid-cleaning device using the composite fibers of this invention;
Fig. 9 is a schematic view of the second preferred embodiment of a fluid-cleaning device using the fiber bundle formed from the composite fibers of this invention; and
Fig. 10 is a cross-sectional view of a photocatalyst-containing fiber unit taken along line X-X in Fig. 9.

The composite fiber according to this invention comprises a first fiber component made from a first organic polymer, and a second fiber component made from a second organic polymer and particulate photocatalyst. The particulate photocatalyst is dispersed in the second organic polymer.

The first organic polymer and the second organic polymer are independently selected from the group consisting of polyester, polycarbonate, polyamide, polyolefin, polyacrylate, polyvinyl alcohol, polyethylene chloride, polyethylene fluoride, polystyrene, and combinations thereof. If optical polymer with good light transmittance, e.g., fluoropolymer, polymethyl methacrylate, polycarbonate and polystyrene, is used as the first organic polymer and the second organic polymer, the photocatalystic activity can be enhanced. Preferably, the first organic polymer and the second organic polymer are polyethylene terephthalate or polymethylmethacrylate (PMMA).

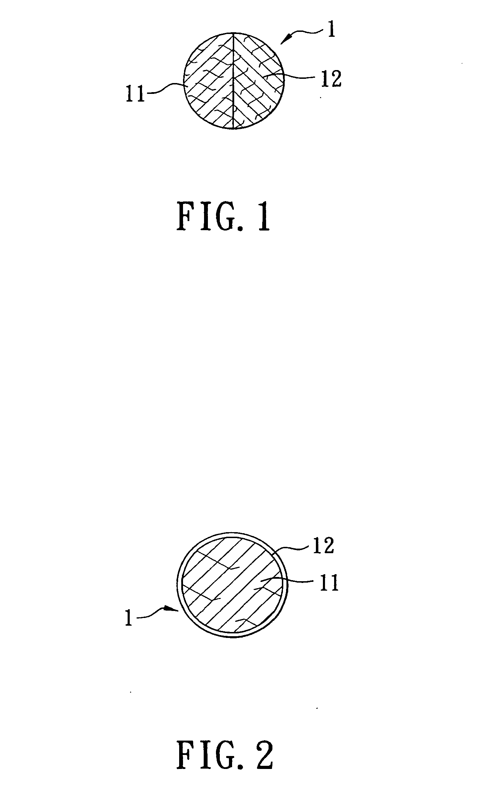

Fig. 1 illustrates the first preferred embodiment of the composite fiber 1 according to this invention. In this embodiment, the first fiber component 11 and the second fiber component 12 are co-extruded in a side-by-side arrangement. The first fiber component 11 is present in an amount ranging from 20 to 80 vol%, and the second fiber component 12 is present in an amount ranging from 20 to 80 vol%. Preferably, each of the first fiber component 11 and the second fiber component 12 is present in an amount of 50 vol%.

Fig. 2 illustrates the second preferred embodiment of the composite fiber 1 according to this invention. In this embodiment, the first fiber component 11 and the second fiber component 12 are co-extruded in a core-and-sheath arrangement. The first fiber component 11 defines the core portion, and the second fiber component 12 defines the sheath portion. The first fiber component 11 is present in an amount ranging from 40 to 90 vol%, and the second fiber component 12 is present in an amount ranging from 10 to 60 vol%. Preferably, the first fiber component 11 is present in an amount ranging from 70 to 90 vol%, and the second fiber component 12 is present in an amount ranging from 10 to 30 vol%. The ranges mentioned above are exemplary, and should not be construed as limiting the scope of this invention. Specifically, the content of the second fiber component 12 is in an amount sufficient to fully cover the surface area of the first fiber component 11.

Furthermore, the photocatalyst used is a commercially available product, such as TiO₂, ZnO, SnO, WO, Fe₂O₃, etc. The diameter of the particulate photocatalyst can be varied based on the actual requirements. It is preferable that the photocatalyst dispersed in the second organic polymer is titanium dioxide in the form of anatase crystal. The diameter of the photocatalyst ranges from 10 nm to 900 nm, preferably from 10 nm to 500 nm, and more preferably from 10 nm to 200 nm, and most preferably from 10 nm to 100 nm.

The cross-sectional diameter, length, and shape of the composite fiber 1 according to this invention can be varied based on the actual requirements. The cross-sectional diameter of the composite fiber 1 ranges from 5 µm to 2 mm , and preferably from 10 to 100 µ m. The length of the composite fiber 1 ranges from 1 mm to 80 mm.

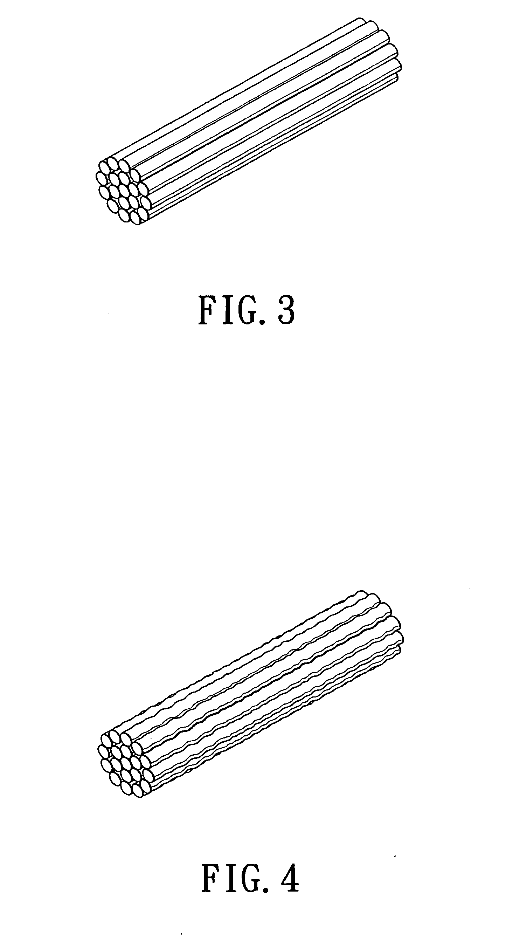

As shown in Figs. 3 to 7, the composite fiber can be further processed into fiber assemblies, such as fiber bundle, bulky fibers, fabric, non-woven fabric, and braided fabric.

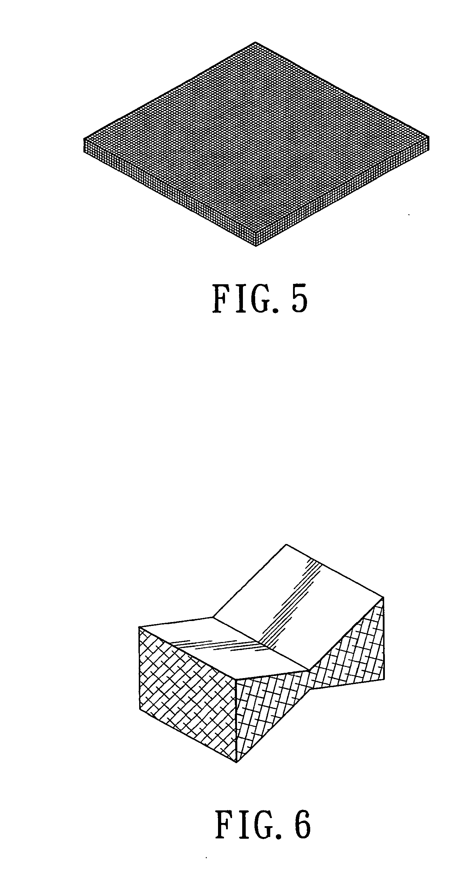

Fiber bundle is formed by assembling, fixing, and cutting the composite fibers. Bulky fibers are produced by crimping, assembling, fixing, and cutting the composite fibers. Non-woven fabric is manufactured through opening, carding, lapping and consolidation processes. The non-woven fabric thus formed can be further structurally reinforced, e.g., bonded, and then cut into desired dimension so as to obtain a stronger non-woven fabric, such as the one shown in Fig. 6. Braided fabric is producing by braiding and cutting processes.

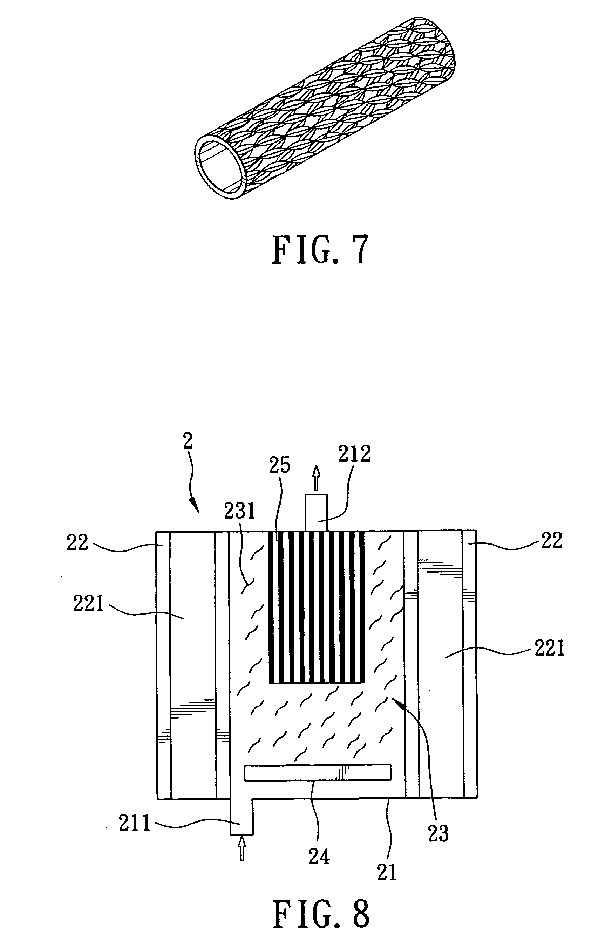

Fig. 8 illustrates the first preferred embodiment of fluid-cleaning device, i.e., a water-cleaning device 2 according to this invention. The water-cleaning device 2 includes: a reactor unit 21 for receiving wastewater to be processed; a photocatalyst unit 23 disposed in the reactor unit 21 to contact wastewater to be processed and including the composite fibers 231 of this invention; and light units 22 for irradiating the photocatalyst unit 23 to activate the particulate photocatalyst.

The reactor unit 21 includes an inlet 211 and an outlet 212. The light units 22 are provided with UV lamps 221 and are respectively disposed at two opposite sides of the reactor unit 21. The composite fibers 231 of the photocatalyst unit 23 are freely suspended in the reactor unit 21.

The water-cleaning device 2 further comprises a stirring unit 24 near the inlet 211 for stirring wastewater in the reactor unit 21, thereby enhancing contact between wastewater and the composite fibers 231. In addition, the water-cleaning device 2 further includes a filter 25 for separating the composite fibers 231 from the processed water prior to discharge of the treated water through the outlet 212.

In operation, wastewater to be cleaned is introduced into the reactor unit 21 through the inlet 211 to contact the composite fibers 231 of the photocatalyst unit 23. UV light generated by the light units 22 is guided into the reactor unit 21 to activate the photocatalyst in the composite fibers 231. After reaction, the cleaned water is separated from the composite fibers 231 by the filter 25, and is discharged from the reactor unit 21 through the outlet 212.

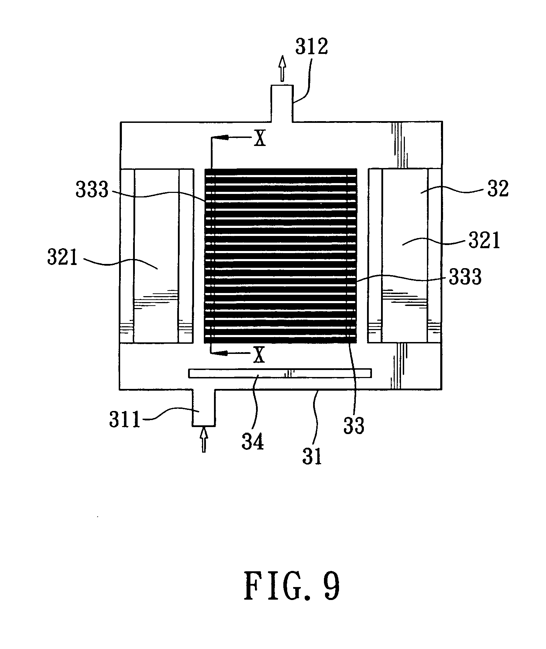

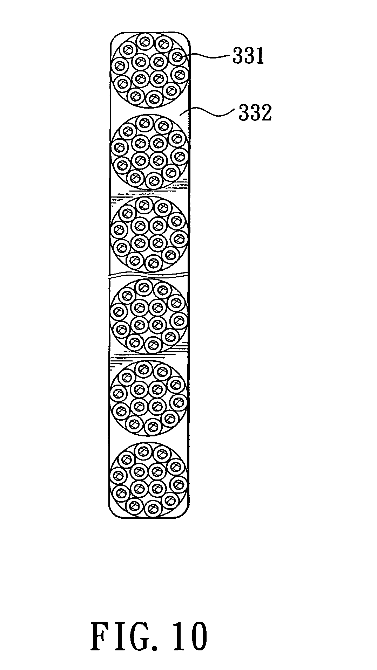

Fig. 9 illustrates the second preferred embodiment of a fluid-cleaning device, i.e., a water-cleaning device 3 according to this invention. The water-cleaning device 3 includes: a reactor unit 31 for receiving wastewater to be processed; a photocatalyst-containing fiber unit 33 disposed in the reactor unit 31 to contact wastewater to be processed and including fiber bundles 331 (see Fig. 10) obtained from Example 2 to be described hereinafter; and a light unit 32 for irradiating the photocatalyst-containing fiber unit 33 to activate the particulate photocatalyst.

The reactor unit 31 includes an inlet 311 and an outlet 312. The light unit 32 includes UV lamps 321 disposed at two opposite sides of the reactor unit 31. As shown in Fig. 10, a plurality of fiber bundles 331 are arranged in the reactor unit 21 in a parallel manner and are grouped together by applying resin at the two sides of the fiber bundles 331. The photocatalyst-containing fiber unit 33 is provided with a light guiding surface 333 at the two sides of fiber bundles 331 to guide light irradiated from the UV lamps 321 of the light unit 32 into the fiber bundles 331 of the photocatalyst-containing fiber unit 33.

The water-cleaning device 3 further includes a stirring unit 34 near the inlet 311 for stirring wastewater in the reactor unit 31.

The composite fiber with photocatalyst can be used to clean air or water. In this invention, water is used as an example for illustration.

### Example 1

70 vol% Polyethylene terephthalate as a first component and 30 vol% of a mixture of polyethylene terephthalate and Ti02 (99: 1 wt%) as a second component were subj ected to bicomponent spinning process to obtain a composite fiber with a diameter of 0 . 2 mm. The composite fiber thus formed was cut into 5 mm length.

The composite fiber thus obtained was then dispersed in 20 ml, 10 ppm methylene blue solution, and was irradiated with UV light to observe the color change of methylene blue solution. After 18 hours of reaction, the color of the methylene blue solution changed from blue to colorless. It is apparent that the composite fiber of this invention exhibits photocatalystic effect.

### Example 2

80 vol% Polymethylmethacrylate as a first component and 20 vol% of a mixture of polymethylmethacrylate and Ti02 (99:1 wt%) as a second component were subjected to bicomponent spinning process to obtain a composite fiber with a diameter of 0.2 mm. The composite fibers thus obtained were subjected to bundling and cutting processes to form a fiber bundle with a length of 10 cm.

The composite fiber thus obtained was then dispersed in 20 ml, 10 ppm methylene blue solution, and was irradiated with UV light to observe the color change of methylene blue solution. After 20 hours of reaction, the color of the methylene blue solution changed from blue to colorless. It is apparent that the composite fiber of this invention exhibits photocatalystic effect.

Since the second fiber component of the composite fiber of this invention is formed by first mixing the photocatalyst and the second organic polymer and then extruding the mixture, the aforesaid peeling problem associated with the prior art during wastewater treatment can be eliminated.

## Claims

1. A fluid cleaning system (2, 3), **characterized by**:
a reactor unit (21, 31) for receiving a fluid body to be processed;
a photocatalyst unit (23, 33) disposed in said reactor unit (21, 31) to contact the fluid body to be processed and including composite fibers (1, 231), said composite fibers (1, 231) having a length ranging from 1 to 80 mm and including a first fiber component (11) made from a first organic polymer, and a second fiber component (12) made from a second organic polymer ant particulate photocatalyst; and
a light unit (22, 32) for irradiating said photocatalyst unit. (23, 33) to activate said particulate photocatalyst.

2. The fluid cleaning system (2, 3) of Claim 1, further **characterized by** a stirring unit (24, 34) for stirring the fluid body in said reactor unit (21, 31) .

3. The fluid cleaning system (2) of Claim 2, further **characterized by** a filtering unit (25) disposed in said reactor unit (21, 31) for separating the fluid body from said photocatalyst unit (23).

4. The fluid cleaning system (2) of Claim 3, **characterized in that** said composite fibers (1) are freely suspended in the fluid body in said reactor unit (21).

5. The fluid cleaning system (3) of Claim 2, **characterized in that** said composite fibers are in the form of fiber bundles (331), said fiber bundles (331) being arranged in a parallel manner.

6. The fluid cleaning system (2, 3) of Claim 1, **characterized in that** said particulate photocatalyst is dispersed in the second organic polymer.

7. The fluid cleaning system (2, 3) of Claim 1, **characterized in that** said first fiber component (11) and said second fiber component (12) are co-extruded in a side-by-side arrangement.

8. The fluid cleaning system (2, 3) of Claim 1, **characterized in that** said first fiber component (11) and said second fiber component (12) are co-extruded in a core-and-sheath arrangement.

9. The fluid cleaning system (2, 3) of Claim 1, **characterized in that** said first organic polymer and said second organic polymer are independently selected from the group consisting of polyester, polycarbonate, polyamide, polyolefin, polyacrylate, polyvinyl alcohol, polyethylene chloride, polyethylene fluoride, polystyrene, and combinations thereof.

10. The fluid cleaning system (2, 3) of Claim 9, **characterized in that** said first organic polymer and said second organic polymer are polyethylene terephthalate.

11. The fluid cleaning system (2, 3) of Claim 9, **characterized in that** said first organic polymer and said second organic polymer are polymethylmethacrylate (PMMA) .

12. The fluid cleaning system (2, 3) of Claim 1, **characterized in that** said photocatalyst is present in an amount ranging from 0.5 to 8 wt% of said second fiber component.

13. The fluid cleaning system (2, 3) of Claim 1, **characterized in that** said particulate photocatalyst is titanium dioxide.

14. The fluid cleaning system (2, 3) of Claim 1, **characterized in that** the diameter of said particulate photocatalyst ranges from 10 nm to 100 nm.

15. The fluid cleaning system (2, 3) of Claim 1, **characterized in that** said composite fibers (1, 231) have a diameter ranging from 5 µm to 2 mm.

16. A method for cleaning a fluid, **characterized by**:
preparing composite fibers (1, 231) having a length ranging from 1 to 80 mm and including a first fiber component (11) made from a first organic polymer, and a second fiber component (12) made from a second organic polymer and particulate photocatalyst;
adding the composite fibers (1, 231) in a fluid body in a reactor unit (21) such that the composite fibers (1, 231) are freely suspended in the fluid body; and
irradiating the suspended composite fibers (1, 231) in the fluid body in the reactor unit (21).

17. The method of Claim 16, **characterized in that** the particulate photocatalyst is dispersed in the second organic polymer.

18. The method of Claim 16, **characterized in that** the first fiber component (11) and the second fiber component (12) are co-extruded in a side-by-side arrangement.

19. The method of Claim 16, **characterized in that** the first fiber component (11) and the second fiber component (12) are co-extruded in a core-and-sheath arrangement.

## Patentansprüche

1. Fluidreinigungssystem (2, 3), **gekennzeichnet durch**:
eine Reaktoreinheit (21, 31) zur Aufnahme einer zu bearbeitenden Fluidsubstanz;
eine Fotokatalysatoreinheit (23, 33), die in der Reaktoreinheit (21, 31) angeordnet ist, um die zu bearbeitende Fluidsubstanz zu kontaktieren, und Verbundfasern (1, 231) umfasst, wobei die Verbundfasern (1, 231) eine Länge von 1 bis 80 mm haben und eine erste Faserkomponente (11), die aus einem ersten organischen Polymer hergestellt ist, und eine zweite Faserkomponente (12) umfassen, die aus einem zweiten organischen Polymer und einem partikulären Fotokatalysator hergestellt ist; und
eine Lichteinheit (22, 32) zur Bestrahlung der Fotokatalysatoreinheit (23, 33), um den partikulären Fotokatalysator zu aktivieren.

2. Fluidreinigungssystem (2, 3) nach Anspruch 1, ferner durch eine Rühreinheit (24, 34) zum Rühren der Fluidsubstanz in der Reaktoreinheit (21, 31) **gekennzeichnet**.

3. Fluidreinigungssystem (2) nach Anspruch 2, ferner durch eine Filtereinheit (25) **gekennzeichnet**, die in der Reaktoreinheit (21, 31) angeordnet ist, um die Fluidsubstanz von der Fotokatalysatoreinheit (23) zu trennen.

4. Fluidreinigungsystem (2) nach Anspruch 3, **dadurch gekennzeichnet, dass** die Verbundfasern (1) in der Fluidsubstanz in der Reaktoreinheit (21) frei suspendiert sind.

5. Fluidreinigungssystem (3) nach Anspruch 2, **dadurch gekennzeichnet, dass** die Verbundfasern in Form von Faserbündeln (331) vorliegen, wobei die Faserbündel (331) parallel angeordnet sind.

6. Fluidreinigungssystem (2, 3) nach Anspruch 1, **dadurch gekennzeichnet, dass** der partikuläre Fotokatalysator im zweiten organischen Polymer dispergiert ist.

7. Fluidreinigungssystem (2, 3) nach Anspruch 1, **dadurch gekennzeichnet, dass** die erste Faserkomponente (11) und die zweite Faserkomponente (12) nebeneinander angeordnet koextrudiert sind.

8. Fluidreinigungssystem (2, 3) nach Anspruch 1, **dadurch gekennzeichnet, dass** die erste Faserkomponente (11) und die zweite Faserkomponente (12) in einer Kern- und Hüllenanordnung koextrudiert sind.

9. Fluidreinigungssystem (2, 3) nach Anspruch 1, **dadurch gekennzeichnet, dass** das erste organische Polymer und das zweite organische Polymer unabhängig aus der Gruppe ausgewählt sind, die aus Polyester, Polycarbonat, Polyamid, Polyolefin, Polyacrylat, Polyvinylalkohol, Polyethylenchlorid, Polyethylenfluorid, Polystyrol und Kombinationen von diesen besteht.

10. Fluidreinigungssystem (2, 3) nach Anspruch 9, **dadurch gekennzeichnet, dass** es sich beim ersten organischen Polymer und zweiten organischen Polymer um Polyethylenterephthalat handelt.

11. Fluidreinigungssystem (2, 3) nach Anspruch 9, **dadurch gekennzeichnet, dass** es sich beim ersten organischen Polymer und zweiten organischen Polymer um Polymethylmethacrylat (PMMA) handelt.

12. Fluidreinigungssystem (2, 3) nach Anspruch 1, **dadurch gekennzeichnet, dass** der Fotokatalysator in einer Menge von 0,5 bis 8 Gew.-% der zweiten Faserkomponente vorliegt.

13. Fluidreinigungssystem (2, 3) nach Anspruch 1, **dadurch gekennzeichnet, dass** es sich bei dem partikulären Fotokatalysator um Titandioxid handelt.

14. Fluidreinigungssystem (2, 3) nach Anspruch 1, **dadurch gekennzeichnet, dass** der Durchmesser des partikulären Fotokatalysators 10 nm bis 100 nm beträgt.

15. Fluidreinigungssystem (2, 3) nach Anspruch 1, **dadurch gekennzeichnet, dass** die Verbundfasern (1, 231) einen Durchmesser von 5 µm bis 2 mm haben.

16. Verfahren zum Reinigen eines Fluids, **gekennzeichnet durch**:
Vorbereiten von Verbundfasern (1, 231), die eine Länge von 1 bis 80 mm haben und eine erste Faserkomponente (11), die aus einem ersten organischen Polymer hergestellt ist, und eine zweite Faserkomponente (12) umfassen, die aus einem zweiten organischen Polymer und einem partikulären Fotokatalysator hergestellt ist;
Beimengen der Verbundfasern (1, 231) in eine Fluidsubstanz in einer Reaktoreinheit (21), und zwar so, dass die Verbundfasern (1, 231) in der Fluidsubstanz frei suspendiert werden; und
Bestrahlen der suspendierten Verbundfasern (1, 231) in der Fluidsubstanz in der Reaktoreinheit (21).

17. Verfahren nach Anspruch 16, **dadurch gekennzeichnet, dass** der partikuläre Fotokatalysator im zweiten organischen Polymer dispergiert wird.

18. Verfahren nach Anspruch 16, **dadurch gekennzeichnet, dass** die erste Faserkomponente (11) und die zweite Faserkomponente (12) nebeneinander angeordnet koextrudiert werden.

19. Verfahren nach Anspruch 16, **dadurch gekennzeichnet, dass** die erste Faserkomponente (11) und die zweite Faserkomponente (12) in einer Kern- und Hüllenanordnung koextrudiert werden.

## Revendications

1. Un système de nettoyage de fluide (2, 3), **caractérisé par** :
une unité de réacteur (21, 31) destinée à recevoir un corps fluide à traiter ;
une unité photocatalytique (23, 33) disposée dans ladite unité de réacteur (21, 31), destinée à entrer en contact avec le corps fluide à traiter et comprenant des fibres composites (1, 231), lesdites fibres composites (1, 231) ayant une longueur comprise entre 1 et 80 mm et comprenant un premier composant fibreux (11) composé d'un premier polymère organique, et un second composant fibreux (12) composé d'un second polymère organique et d'un photocatalyseur particulaire ; et
une unité lumineuse (22, 32) destinée à irradier ladite unité photocatalytique (23, 33) afin d'activer ledit photocatalyseur particulaire.

2. Le système de nettoyage de fluide (2, 3) de la revendication 1, **caractérisé en outre par** une unité de brassage (24, 34) destinée à brasser le corps fluide dans ladite unité de réacteur (21, 31).

3. Le système de nettoyage de fluide (2) de la revendication 2, **caractérisé en outre par** une unité de filtration (25) disposée dans ladite unité de réacteur (21, 31) et destinée à séparer le corps fluide de ladite unité photocatalytique (23).

4. Le système de nettoyage de fluide (2) de la revendication 3, **caractérisé en ce que** lesdites fibres composites (1) sont en suspension libre dans le corps fluide dans ladite unité de réacteur (21).

5. Le système de nettoyage de fluide (3) de la revendication 2, **caractérisé en ce que** lesdites fibres composites sont présentes sous forme de faisceaux de fibres (331), lesdits faisceaux de fibres (331) étant disposés en parallèle.

6. Le système de nettoyage de fluide (2, 3) de la revendication 1, **caractérisé en ce que** ledit photocatalyseur particulaire est dispersé dans le second polymère organique.

7. Le système de nettoyage de fluide (2, 3) de la revendication 1, **caractérisé en ce que** le premier composant fibreux (11) et le second composant fibreux (12) sont co-extrudés selon une configuration côte-à-côte.

8. Le système de nettoyage de fluide (2, 3) de la revendication 1, **caractérisé en ce que** le premier composant fibreux (11) et le second composant fibreux (12) sont co-extrudés selon une configuration de type âme-gaine.

9. Le système de nettoyage de fluide (2, 3) de la revendication 1, **caractérisé en ce que** ledit premier polymère organique et ledit second polymère organique sont sélectionnés indépendamment dans le groupe composé de polyester, de polycarbonate, de polyamide, de polyoléfine, de polyacrylate, d'alcool de polyvinyle, de chlorure de polyéthylène, de fluorure de polyéthylène, de polystyrène, et de combinaisons de ceux-ci.

10. Le système de nettoyage de fluide (2, 3) de la revendication 9, **caractérisé en ce que** ledit premier polymère organique et ledit second polymère organique sont du téréphthalate de polyéthylène.

11. Le système de nettoyage de fluide (2, 3) de la revendication 9, **caractérisé en ce que** ledit premier polymère organique et ledit second polymère organique sont du méthacrylate de polyméthyle (PMMA).

12. Le système de nettoyage de fluide (2, 3) de la revendication 1, **caractérisé en ce que** ledit photocatalyseur est présent en quantité allant de 0,5 à 8 % en poids dudit second composant fibreux.

13. Le système de nettoyage de fluide (2, 3) de la revendication 1, **caractérisé en ce que** ledit photocatalyseur particulaire est du dioxyde de titane.

14. Le système de nettoyage de fluide (2, 3) de la revendication 1, **caractérisé en ce que** le diamètre dudit photocatalyseur particulaire est compris entre 10 nm et 100 nm.

15. Le système de nettoyage de fluide (2, 3) de la revendication 1, **caractérisé en ce que** lesdites fibres composites (1, 231) ont un diamètre compris entre 5 µm et 2 mm.

16. Un procédé de nettoyage d'un fluide, **caractérisé par** :
la préparation de fibres composites (1, 231) ayant une longueur comprise entre 1 et 80 mm et comprenant un premier composant fibreux (11) composé d'un premier polymère organique, et un second composant fibreux (12) composé d'un second polymère organique et d'un photocatalyseur particulaire ;
l'adjonction des fibres composites (1, 231) dans un corps fluide dans une unité de réacteur (21) de façon que les fibres composites (1, 231) soient en suspension libre dans le corps fluide ; et
l'irradiation des fibres composites en suspension (1, 231) dans le corps fluide dans l'unité de réacteur (21).

17. Le procédé de la revendication 16, **caractérisé en ce que** le photocatalyseur particulaire est dispersé dans le second polymère organique.

18. Le procédé de la revendication 16, **caractérisé en ce que** le premier composant fibreux (11) et le second composant fibreux (12) sont co-extrudés selon une configuration côte-à-côte.

19. Le procédé de la revendication 16, **caractérisé en ce que** le premier composant fibreux (11) et le second composant fibreux (12) sont co-extrudés selon une configuration de type âme-gaine.
